(19) Europäisches Patentamt
European Patent Office
Office européen des brevets

(11) EP 1 892 910 A2

(12) **EUROPÄISCHE PATENTANMELDUNG**

(43) Veröffentlichungstag:
   **27.02.2008 Patentblatt 2008/09**

(51) Int Cl.:
   *H04L 25/06* (2006.01)

(21) Anmeldenummer: **07013698.1**

(22) Anmeldetag: **12.07.2007**

(84) Benannte Vertragsstaaten:
   **AT BE BG CH CY CZ DE DK EE ES FI FR GB GR HU IE IS IT LI LT LU LV MC MT NL PL PT RO SE SI SK TR**
   Benannte Erstreckungsstaaten:
   **AL BA HR MK YU**

(30) Priorität: **21.08.2006 DE 102006038963**

(71) Anmelder: **Micronas GmbH**
   **79108 Freiburg (DE)**

(72) Erfinder:
   • **Bock, Christian**
    **79108 Freiburg (DE)**
   • **Keller, Stefan**
    **79106 Freiburg (DE)**

(74) Vertreter: **Patentanwälte**
   **Westphal, Mussgnug & Partner**
   **Am Riettor 5**
   **78048 Villingen-Schwenningen (DE)**

(54) **Verfahren bzw. Schaltungsanordnung zum Entscheiden eines Symbols beim Empfang eines mit einem Quadratur-Signalpaar gekoppelten Signals**

(57)   Die Erfindung bezieht sich auf ein Verfahren bzw. eine Schaltungsanordnung zum Entscheiden eines Symbols (S) beim Empfang eines mit einem Quadratur-Signalpaar (I, Q) gekoppelten Signals (sd), bei dem die Entscheidung durch Analyse der Metrik zumindest eines Empfangspunktes (S(r, φ)) zu zumindest einem Soll-punkt (Se(r, φ)) im komplexen Koordinatenraum (I, Q) getroffen wird und die Metrik im nicht oder im nichtaus-schließlich-kartesischen komplexen Koordinatenraum analysiert und daraufhin die Entscheidung getroffen wird, wobei während des Entscheidungsprozesses ein zweit-wahrscheinlichster Sollpunkt (Se*(r, (φ)) sowie eine Zu-verlässigkeit (Z) der Entscheidung bestimmt werden.

Fig. 1

**Beschreibung**

Die Erfindung bezieht sich auf ein Verfahren zum Entscheiden eines Symbols beim Empfang eines mit einem Quadratur-Signalpaar gekoppelten Signals mit den oberbegrifflichen Merkmalen gemäß Patentanspruch 1 bzw. auf eine Schaltungsanordnung zum derartigen Entscheiden eines Symbols beim Empfang eines mit einem Quadratur-Signalpaar gekoppelten Signals.

Bei den meisten derzeitigen Rundfunk-, Fernseh- und Datendiensten mit Übertragungen über insbesondere Kabel oder terrestrischen Funk werden zum Senden von Daten komplexe digitale Modulationsverfahren wie beispielsweise QAM (Quadratur-Amplituden-Modulation) verwendet. Höherwertige Symbolalphabete gemäß beispielsweise 256-QAM oder 1024-QAM machen eine sehr genaue Empfängerregelung in einer Empfangseinrichtung erforderlich. Neben Gaußschem Rauschen besteht ein Hauptproblem bei der Empfängerregelung in einem Phasenrauschen, welches durch ungenügende Sender- und Misch-Oszillatoren erzeugt wird. Ein solches Phasenrauschen bewirkt ein statistisches Hin- und Herdrehen des Koordinatensystems des empfangenen Signals.

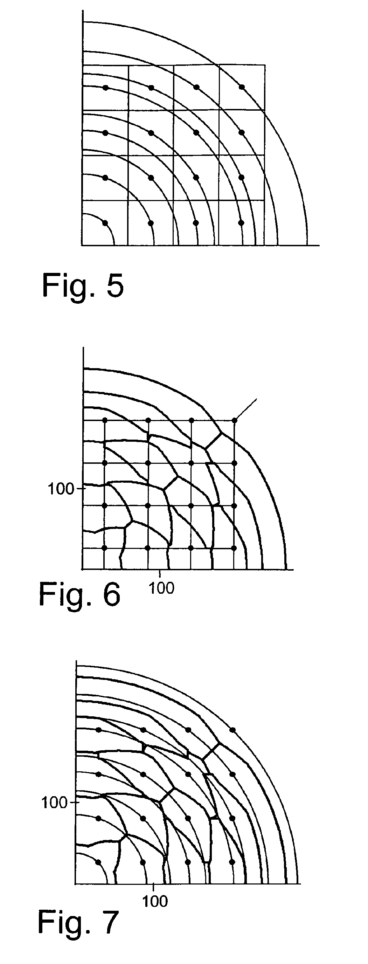

DE 103 44 756 A1 beschreibt eine Schaltungsanordnung zum Entscheiden eines Symbols beim Empfang eines mit einem Quadratur-Signalpaar gekoppelten Signals. Die Schaltungsanordnung weist einen Koordinatenumsetzer zum Umsetzen des Signals aus kartesischen Koordinaten in nicht-kartesische Koordinaten, eine Vorentscheidungseinrichtung zum Bestimmen eines minimalen Abstands zwischen einem Empfangspunkt und zumindest einem entsprechenden Sollpunkt anhand des nicht-kartesischen Signals und eine Entscheidungseinrichtung zum Entscheiden eines Symbols aufgrund der Abstandsanalyse auf. Eine Steuereinrichtung in der Schaltungsanordnung führt dabei ein Verfahren zum Entscheiden eines Symbols beim Empfang eines mit einem Quadratur-Signalpaar gekoppelten Signals durch, bei dem die Entscheidung durch Analyse des Abstandes zumindest eines Empfangspunktes zu zumindest einem Sollpunkt im komplexen Koordinatenraum getroffen wird. Dabei wird als besonderes Merkmal der Abstand im nicht- oder im nicht-ausschließlich-kartesischen komplexen Koordinatenraum analysiert und daraufhin die Entscheidung getroffen. Vermieden werden dadurch Symbolentscheidungen mit einem Raster mit Grenzen, welche nach Gaußschem Rauschen optimiert sind und Quadrate um Symbolpunkte bilden. Verfahrensgemäß werden Entscheidungszellen gebildet, welche im Gegensatz zu Quadraten in Richtung der Phase aufgeweitet sind, wie dies aus dem Unterschied zwischen Fig. 5 und Fig. 6 erkennbar ist.

Fig. 5 zeigt den ersten Quadrant von 64[CB1]-QAM mit möglichen Symbolen bzw. Symbolpositionen, Symbolradien und kartesischen Entscheidungsgrenzen. Fig. 6 zeigt demgegenüber in Richtung der Phase aufgeweitete Entscheidungsgrenzen sowie wieder mögliche Symbole und Symbolradien.

Durch diese Verfahrensweise wird erreicht, dass eine Entscheidung nicht im kartesischen Raum, das heißt im I-Q-Koordinatensystem, sondern im Polar-Koordinatensystem getroffen wird. Während bei der kartesischen Entscheidung ein Abstand $\Delta I^2 + \Delta Q^2$ zwischen digitalisiertem Eingangssignal und einem Symbol des Alphabets minimiert wird, wird bei der Entscheidung im Polar-Koordinatensystem ein Abstand $a|\Delta r| + |\Delta \varphi|$ oder der Abstand $a\Delta r^2 + \Delta \varphi^2$ oder eine Kombination davon bestimmt. Möglich ist eine Kombination zwischen den Systemen, welche sowohl Parameter aus dem Polar-Koordinatensystem als auch Parameter aus dem kartesischen System berücksichtigt. Der Faktor a gibt dabei die Form des Entscheidungsnetzes an und kann den Empfangsbedingungen angepasst werden.

Während gemäß der kartesischen Entscheidung die Grenzen durch die Geometrie der insbesondere quadratischen Zellen vorgegeben sind und sich die Entscheidungen leicht durch Abschneiden der niederwertigen Bits realisieren lassen, müssen für die Entscheidung im Polar-Koordinatensystem alle Abstände explizit berechnet werden. Um den Aufwand dafür gering zu halten, werden vorzugsweise nur die wahrscheinlichsten Symbole bzw. Symbolpositionen in die Auswahl einbezogen, z.B. nur vier mögliche Symbole. Für die Auswahl wird ein Hilfsentscheider nach Art der kartesischen Entscheidung verwendet. Ein Gitternetz des Hilfsentscheiders ist anhand Fig. 7 skizziert. Zur Entscheidung werden nur diejenigen vier Symbole auf den Eckpunkten eines jeden Quadrates des Hilfs-Gitternetzes gewählt, innerhalb dessen das empfangene Symbol liegt. Für die äußeren Regionen werden andere Berechnungsregeln verwendet.

Allgemein bekannt ist der Einsatz von Viterbi-Decodern, welche zur Fehlerkorrektur eines Trellis-codierten Informationsstromes eingesetzt werden, bei dem nicht alle Symbolfolgen möglich sind. Dabei wird nach dem Empfang einer Symbolfolge der Abstand zu mehreren erlaubten Symbolfolgen verglichen und die wahrscheinlichste Symbolfolge ausgewählt, das heißt diejenige Symbolfolge, welche die geringste Fehlerzahl aufweist. Die Bewertung der Fehler wird genauer, wenn nicht nur so genannte "harte" Fehler betrachtet werden, bei denen jedes falsche Bit als ein Fehler bewertet wird, sondern im Rahmen einer so genannten Soft-Decision auch ein "weicher" Fehler betrachtet wird. Unter einem weichen Fehler wird der Abstand verstanden, den das empfangene und digitalisierte Signal zu dem ausgewählten Symbol hatte sowie der Abstand zum nächst-wahrscheinlichen Symbol.

Die Aufgabe der Erfindung besteht darin, eine Schaltungsanordnung bzw. ein Verfahren zum Entscheiden eines Symbols beim Empfang eines mit einem Quadratur-Signalpaar gekoppelten Signals mit einer Verfahrensweise, bei welcher der Abstand im nicht- oder im nicht-ausschließlich-kartesischen komplexen Koordinatenraum analysiert wird, zu verbessern, um zusätzlich eine Zuverlässigkeitsinformation zu erhalten.

Diese Aufgabe wird gelöst durch ein Verfahren zum Entscheiden eines Symbols beim Empfang eines mit einem Quadratur-Signalpaar gekoppelten Signals mit den Merkmalen gemäß Patentanspruch 1 bzw. durch eine Schaltungsanordnung zum Entscheiden eines Symbols beim Empfang eines mit einem Quadratur-Signalpaar gekoppelten Signals mit den Merkmalen gemäß Patentanspruch 10. Vorteilhafte Ausgestaltungen sind Gegenstand abhängiger Ansprüche.

Durchgeführt wird somit ein Verfahren zum Entscheiden eines Symbols beim Empfang eines mit einem Quadratur-Signalpaar gekoppelten Signals sd, bei dem die Entscheidung durch Analyse der Metrik bzw. des Abstandes zumindest eines Empfangspunktes zu zumindest einem Sollpunkt im komplexen Koordinatenraum getroffen wird und die Metrik im nicht oder im nicht-ausschließlich-kartesischen komplexen Koordinatenraum analysiert und daraufhin die Entscheidung getroffen wird, wobei während des Entscheidungsprozesses eine Zuverlässigkeit der Entscheidung bestimmt wird.

Die Entscheidung wird bevorzugt im polaren Koordinatenraum berücksichtigt, wobei als Metrik der euklidische Abstand zwischen Empfangs- und Sollpunkten und/oder eine Summe oder die Werte von Winkel- und Radius-Projektionen der Metrik zwischen Empfangspunkt und zumindest einem Sollpunkt analysiert wird.

Die Zuverlässigkeit wird bevorzugt bestimmt durch Berücksichtigung einer geringsten Metrik zwischen dem Empfangspunkt zu sowohl einem ersten als auch einem zweiten Sollpunkt. Bevorzugt werden die jeweils geringsten Metriken zu den Sollpunkten für das vorläufige Symbol bestimmt. Der zweite Sollpunkt bildet vorzugsweise ein für die Entscheidung zweitwahrscheinlichstes Symbol.

Die Zuverlässigkeit Z kann vorteilhaft bestimmt werden gemäß

$$Z = \log\left( \frac{\sum_{A \in M1} P[s = \alpha \mid R]}{\sum_{A \in M0} P[s = \alpha \mid R]} \right)$$

mit der Summe der bedingten Wahrscheinlichkeit P[s=A|R], dass bei empfangenem Symbol R das Symbol $\alpha$ gesendet wurde, über die Menge M1 aller Sendesymbole, welche einen gesendeten Wert "1" repräsentieren, und der entsprechenden Summenbildung über die Menge M0 aller Sendesymbole, welche eine "0" repräsentieren.

Die Zuverlässigkeit Z kann einfacher bestimmt werden gemäß

$$Z = \log\left( \frac{P[s = \alpha1 \mid R]}{P[s = \alpha0 \mid R]} \right)$$

mit P[s = $\alpha$1|R] für die Wahrscheinlichkeit eines des wahrscheinlichsten Sendesymbols mit gesendetem Wert 1 und P[s = $\alpha$0|R] für die Wahrscheinlichkeit eines des wahrscheinlichsten Sendesymbols mit gesendetem Wert 0.

Die Zuverlässigkeit Z kann besonders bevorzugt bestimmt werden gemäß

$$Z = \text{abs}(A1 - A2)/NF = (A2 - A1)/NF$$

mit A1 als geringster Metrik für eine wahrscheinlichste Symbolposition, A2 einer zweit-geringster Metrik zu einer zweit-wahrscheinlichsten Symbolposition und NF als Normierungsfaktor. Der Normierungsfaktor wird dabei bevorzugt gebildet durch die zweit-geringste Metrik oder die Summe der Metriken oder eine Konstante.

Entsprechend bevorzugt wird auch eine Schaltungsanordnung zum Entscheiden eines Symbols beim Empfang eines mit einem Quadratur-Signalpaar gekoppelten Signals mit einem Koordinatenumsetzer zum Umsetzen des Signals aus kartesischen Koordinaten in nicht-kartesische Koordinaten und einer Entscheidungseinrichtung zum Entscheiden eines Symbols aufgrund einer Abstandsanalyse einer minimalen Metrik zwischen einem Empfangspunkt und zwei dazu nächst-wahrscheinlichen Sollpunkten und Bestimmung der Zuverlässigkeit der Entscheidung. Die Schaltungsanordnung dient vorzugsweise zum Durchführen eines der vorstehenden Verfahren.

Gegenüber einer für sich bekannten Entscheidung im Polar-Koordinatensystem wird einem entsprechenden Entscheider bzw. Entscheidungsprozess nunmehr ein Maß für eine Soft-Decision gewonnen[CB2]. Durch diese neuartige Entscheidung wird somit eine Zusatzinformation erhalten, welche der nachfolgende Viterbi-Dekoder benötigt. Vorteilhafte Anwendungsbereiche bieten sich bei komplexen digitalen Modulationsverfahren wie insbesondere QAM. Solche Modulationsverfahren werden derzeit insbesondere bei Rundfunk-, Fernseh- und Datendiensten eingesetzt, welche eine Übertragung über Kabel oder auch über terrestrischen Funk nutzen.

Ein Ausführungsbeispiel wird nachfolgend anhand der Zeichnung näher erläutert. Es zeigen:

Fig. 1      eine Phasenkonstellation des ersten Quadranten von 64-QAM mit Entscheidungszellen bzw. Entscheidungsgrenzen, möglichen Symbolen und sekundären Entscheidungsgrenzen,

Fig. 2      ein Schaltungsdiagramm für einen beispielhaften Decoder zum Entscheiden eines Symbols,

Fig. 3      ein Phasendiagramm des ersten Quadranten zur Veranschaulichung eines ersten Normierungsfaktors,

Fig. 4      ein solches Phasendiagramm für einen zweiten Normierungsfaktor und

Fig. 5 - 7   Diagramme zur Veranschaulichung von Entscheidungsgrenzen gemäß Verfahren des Standes der Technik.

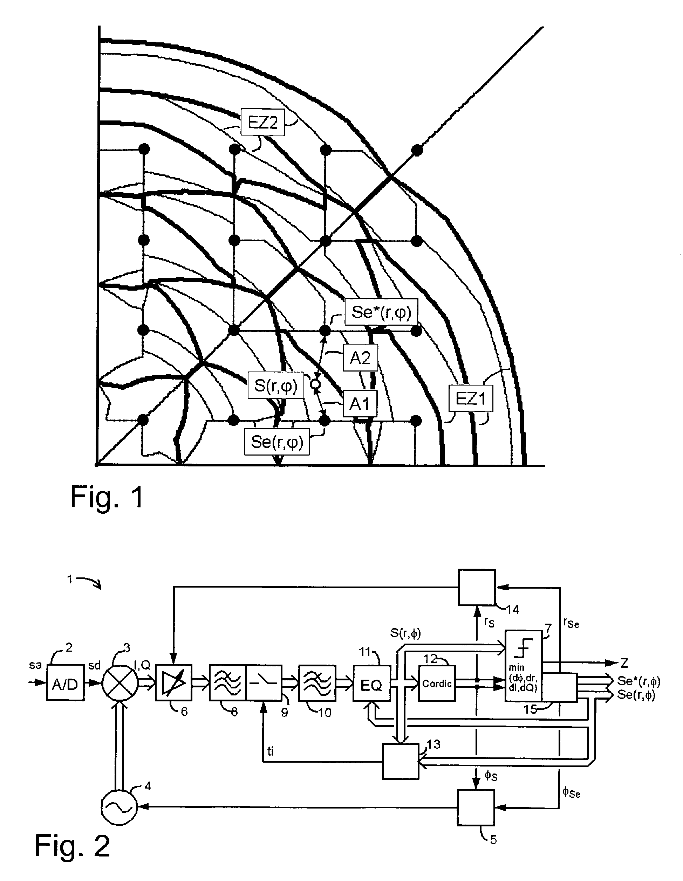

Fig. 1 zeigt eine Darstellung des ersten Quadranten eines 64-QAM-Systems mit möglichen Symbolen S bzw. Symbolpositionen Se(r, φ), welche als Punkte dargestellt sind. Mit dicken durchgezogenen Linien sind erste Entscheidungsgrenzen EZ1 dargestellt, wie sie für eine Entscheidung im Polar-Koordinatensystem gemäß insbesondere DE 103 44 756 A1 für sich genommen bekannt sind. Zusätzlich dargestellt sind außerdem mit dünnen Linien zweite Entscheidungsgrenzen EZ2 zu zweit-wahrscheinlichsten Symbolen bzw. Symbolpositionen Se*(r, φ) als sekundäre Entscheidungsgrenzen. Gebildet wird somit ein System aus ersten Entscheidungszellen für die wahrscheinlichsten Symbole und aus zweiten Entscheidungszellen für zweitwahrscheinlichste Symbole. Für die Durchführung eines Entscheidungsverfahrens wird eine Berechnung im Polar-Koordinatensystem besonders bevorzugt, wobei auch eine Entscheidung in einem kombinierten System mit einer Abstandsberechnung im Polar-Koordinaten- und einer klassischen Abstandsberechnung mit kartesischen Koordinaten vorteilhaft einsetzbar ist. Vorzugsweise sind somit Symbolpositionen Se(r, φ), Se*(r, φ) von Symbolen S in Polar-Koordinaten zu betrachten.

Fig. 2 zeigt beispielhaft eine Schaltungsanordnung eines Demodulators 1 zum Bestimmen und Entscheiden von Symbolen S aus einem digitalisierten Signal sd, welches an ein Quadratur-Signalpaar eines Modulationsverfahrens gemäß z.B. einem QAM-Standard gekoppelt ist. Eine entsprechende Schaltungsanordnung besteht aus einer Vielzahl von Komponenten, wobei je nach Ausgestaltung einzelne Komponenten entfallen können oder weitere Komponenten hinzugefügt werden können. Insbesondere ist anstelle einer Umsetzung in Form einzelner miteinander verdrahteter Komponenten auch eine Umsetzung in Form einer integrierten Schaltungsanordnung möglich. Auch ist die Weiterführung von Signalen oder Signalkomponenten als reelle Signale, komplexe Signale oder einzelne komplexe Signalkomponenten je nach Anwendungszweck und spezieller Schaltungsanordnung entsprechend anpassbar.

Bei der dargestellten Ausführungsform empfängt der Demodulator 1 an einem Eingang von einer Signalquelle, beispielsweise einem Tuner, ein analoges Signal sa, welches mittels eines AD-Umsetzers 2 (AD: Analog/Digital) in das digitale Signal sd umgesetzt wird. Das digitale Signal sd wird einem Quadratur-Umsetzer 3 zugeführt, welcher das digitale bzw. digitalisierte Signal sd in das Basisband umsetzt. Das Basisband entspricht den Anforderungen des Demodulators 1 und des verwendeten Modulationsverfahrens. Entsprechend gibt der Quadratur-Umsetzer 3 das in die beiden Quadratur-Signalkomponenten I, Q des kartesischen Koordinatensystems aufgesplittete digitalisierte Signal aus. Zur Frequenzumsetzung wird der Quadratur-Umsetzer 3 üblicherweise komplexwertig oder mit zwei um 90° versetzten Trägern aus einem lokalen Oszillator 4 gespeist, dessen Frequenz und Phase durch eine Trägerregeleinrichtung 5 gesteuert wird.

In einer anderen Ausführungsform befindet sich der als analoge Schaltung ausgeführte Quadratur-Umsetzer 3 im Pfad des analogen Signals sa. In diesem Fall gibt auch der lokale Oszillator 4 zwei um 90° versetzte analoge Träger aus und es sind zwei AD-Umsetzer erforderlich, um beide Quadratur-Signalkomponenten I, Q zu digitalisieren.

Die Quadratur-Signalkomponenten I, Q, welche von dem Quadratur-Umsetzer 3 bzw. in der anderen Ausführungsform von den beiden AD-Umsetzern ausgegeben werden, werden einem regelbaren Verstärker 6 zugeführt. Die Steuerung des regelbaren Verstärkers 6, der auch an anderer Stelle des Signalpfads eingefügt werden kann, dient dazu, den Aussteuerbereich eines Symbolentscheiders 7 möglichst optimal auszunutzen. Die Quadratur-Signalkomponenten I, Q werden vor oder nach der Verstärkung durch den regelbaren Verstärker 6 einem Tiefpass-Filter 8 zugeführt, welcher zur Beseitigung störender Oberwellen dient.

Das derart verstärkte und gefilterte Quadratur-Signalpaar I, Q oder die beiden einzelnen Quadratur-Signalkomponenten I, Q, werden dann einer Symbol-Abtasteinrichtung 9 zugeführt, welche eine Abtastregeleinrichtung aufweist. Die Steuerung der Symbol-Abtasteinrichtung 9 erfolgt über einen Eingang, dem ein Abtastsignal ti zugeführt wird. Die Symbol-Abtastzeitpunkte des Abtastsignals ti orientieren sich im normalen Betriebszustand an der Symbolrate 1/T und üblicherweise auch an der genauen Taktphasenlage des empfangenen digitalen Signals sd. Da in der gezeigten Ausführungsform der erforderliche Digitalisierungstakt des AD-Umsetzers nicht mit dem Abtastsignal ti übereinstimmt bzw. nicht synchronisiert ist, erfolgt üblicherweise eine zeitliche Interpolation zwischen den realen Abtastwerten auf der Symbolrate oder einem ganzzahligen Vielfachen davon.

In einer anderen Ausführungsform entspricht der Abtasttakt des AD-Umsetzers 2 der Symbolrate 1/T oder einem Vielfachen davon. In diesem Fall steuert die Taktsteuereinrichtung den Abtasttakt des AD-Umsetzers 2, und die Abtasteinrichtung 9 entfällt.

Das Ausgangssignal der Abtasteinrichtung 9 wird mittels eines Tiefpass-Filters 10 mit einer Nyquist-Charakteristik gefiltert und einem Entzerrer (Equalizer) 11 zugeführt. Der Entzerrer 11 befreit die beiden Komponenten des Quadratur-Signalpaars I, Q von störenden Verzerrungen und stellt ein vorläufiges Symbol $S(r,\varphi)$ an seinem Ausgang bereit.

Zur Bereitstellung der polaren Koordinaten $r_s$, $\varphi_s$ des vorläufigen Symbols $S(r, \varphi)$ dient ein Koordinatenumsetzer 12, welcher das vorläufige Symbol $S(r,\varphi)$ zugeführt bekommt.

In dem Koordinatenumsetzer 12, der insbesondere als ein Cordic ausgebildet sein kann, wird aus dem zugeführten komplexen Signal im kartesischen Koordinatensystem, das heißt aus einem abgetasteten Quadratur-Signalpaar I, Q, eine Umsetzung in die Polarkoordinaten r, $\varphi$ gebildet. Mit den Polarkoordinaten werden somit eine Radiuskomponente r und eine Winkelkomponente $\varphi$ gemäß $I = r \cdot \cos(\varphi)$ und $Q = r \cdot \sin(\varphi)$ gebildet. Auch sonstige aus der digitalen Signalverarbeitung bekannte Verfahren zur Umwandlung oder Umsetzung von Signalen zwischen den verschiedenen Darstellungssystemen sind einsetzbar.

Während in der in Fig. 2 gezeigten Schaltungsanordnung mit einer Umsetzungseinrichtung 3 zum Umsetzen des digitalen Signals sd in den komplexen kartesischen Raum I, Q und einem zusätzlichen Koordinatenumsetzer 12 zum Umsetzen in polare Koordinaten beschrieben ist, sind auch Schaltungsanordnungen möglich, bei denen bereits der erste Umsetzer das digitale Signal sd in ein komplexes Signal mit polaren Koordinaten r, $\varphi$ umsetzt.

Nachfolgend werden aus derart bereitgestellten vorläufigen Symbolen $S(r, \varphi)$ beziehungsweise deren Polarkoordinaten $r_S$, $\varphi_S$ mittels des Symbolentscheiders 7 so genannte entschiedene Symbole $Se(r,\varphi)$ gebildet.

Die Koordinatenumsetzeinrichtung 15 stellt die aus dem Symbolentscheider 7 empfangene Information über das entschiedene Symbol $Se(r,\varphi)$ in kartesischen Koordinaten $I_{Se}$, $Q_{Se}$ und Polarkoordinaten $r_{Se}$, $\varphi_{Se}$ dar. Dies erfolgt vorzugsweise durch eine Tabelle, kann aber auch mit Hilfe eines Cordics oder eines anderen Koordinatenumsetzalgorithmus stattfinden.

Diese Symbole $Se(r,\varphi)$ und/oder deren Radialkomponente $r_{Se}$ oder deren gewünschte Phase ($\varphi_{Se}$ werden dann weiteren digitalen Signalverarbeitungseinrichtungen, wie insbesondere einem nachfolgenden Viterbidekoder, und vorzugsweise auch den entscheidungsrückgekoppelten Regelkreisen bzw. Komponenten im Demodulator 1 direkt oder indirekt zugeführt. Derart mit den entschiedenen Symbolen $Se(r, \varphi)$ bzw. den Symbolkomponenten $r_{Se}$, $\varphi_{Se}$ versorgt werden insbesondere der Entzerrer 11, die Verstärkungsregeleinrichtung 14, die Trägerregeleinrichtung 5 und die Taktsteuereinrichtung 13. Diese Regelkreise werden dabei je nach Schaltungsanordnung mit beiden Quadratur-Signalkomponenten $I_{Se}$, $Q_{Se}$ des Symbols $Se(r, \varphi)$ in kartesischen Koordinaten oder in polaren Koordinaten versorgt. Möglich ist je nach Schaltungsanordnung auch die Versorgung einzelner der Bauelemente mit nur einer der Quadratur-Signalkomponenten, beispielsweise im Fall der Trägerregeleinrichtung 5 mit dem Winkel $\varphi_{Se}$ bzw. der Phase in polaren Koordinaten oder der Verstärkungsregeleinrichtung 14 mit der Radius- bzw. Amplitudeninformation $r_{Se}$ in polaren Koordinaten.

Die Trägerregeleinrichtung 5 bekommt die Winkelkomponenten $\varphi_S$ des vorläufigen Symbols und $\varphi_{Se}$ des entschiednen Symbols zugeführt und liefert eine Regelspannung an den lokalen Oszillator 4.

Zur Bereitstellung des Abtastsignals ti dient eine Taktsteuereinrichtung 13, die neben dem entschiedenen Symbol $Se(r, \varphi)$ das vorläufige Symbol $S(r,\varphi)$ zugeführt bekommt. Die Taktsteuereinrichtung 13 gibt das Abtastsignal ti aus, welches insbesondere der Symbol-Abtasteinrichtung 9 angelegt wird.

Zur Steuerung des regelbaren Verstärkers 6 wird diesem von einer Amplituden-Steuereinrichtung 14 ein entsprechendes Steuersignal angelegt. Die Verstärkungsregeleinrichtung 14 erhält neben der Radialkomponente $r_{Se}$ des entschiedenen Symbols $Se(r, \varphi)$ die Radialkomponente $r_S$ des vorläufigen Symbols $S(r, \varphi)$ und führt eine Steuerung abhängig vom momentanen Zustand der Radialkomponenten $r_S$, $r_{Se}$ vor bzw. nach dem Symbolentscheider 7 durch.

Vorzugsweise werden dem Symbolentscheider 7 nicht nur die polaren Koordinaten $r_S$, $\varphi_S$ sondern auch die Symbole im kartesischen komplexen Koordinatenraum $I_S$, $Q_S$ angelegt, um mit dem Hilfsentscheider eine Vorentscheidung für eine begrenzte Anzahl von zu betrachtenden Symbolen im Raum der Polarkoordinaten und/oder eine auch kombinierte Entscheidung durchführen zu können. Optional kann der Symbolentscheider 7 auch auf in einem Speicher hinterlegte Vergleichsdaten zugreifen, wie dies für sich bekannt ist.

Zur Steuerung der Taktsteuereinrichtung 13 und der weiteren der Komponenten des Demodulators 1 stehen diese mit einer nicht dargestellten Steuereinrichtung in Verbindung. Die Steuereinrichtung bewirkt einen ordnungsgemäßen Ablauf und steuert die einzelnen Komponenten und Abläufe entsprechend gemäß hardware- und/oder softwaregestützter Anweisungen. Vorzugsweise kann die Steuereinrichtung auch Funktionen einzelner der genannten Komponenten ganz oder teilweise in sich integriert aufweisen.

Wie dies aus Fig. 1 ersichtlich ist, ergibt sich eine Verzerrung von Entscheidungszellen, wenn die Entwcheidung in einem polaren Koordinatensystem stattfindet. Die Entscheidungen des Symbolentscheiders 7 werden vorzugsweise in der gemäß Fig. 1 dargestellten verzerrten Darstellungsform der Entscheidungszellen durchgeführt, wobei Zuordnungen des empfangenen Signals S zu einem Sollsignalpunkt Se(r, φ) durchgeführt werden, wie dies insbesondere aus DE 103 44 756 A1 bekannt ist.

Gemäß der bevorzugten Verfahrensweise wird durch den Demodulator zusätzlich ein Maß für eine Zuverlässigkeit sowie ein zweitwahrscheinlichstes Symbol bereitgestellt, wodurch einem nachfolgenden Viterbi-Dekoder besser ermöglicht wird, die wahrscheinlichste Empfangssequenz von gesendeten Symbolen zu schätzen. Eine entsprechende Zuverlässigkeit Z kann allgemein definiert werden durch:

$$Z = \log\left(\frac{\sum_{A \in M1} P[s = \alpha \mid R]}{\sum_{A \in M0} P[s = \alpha \mid R]}\right) \quad . \tag{1}$$

Dabei wird die Summe der bedingten Wahrscheinlichkeit P [s=A|R], dass bei empfangenem Symbol R das Symbol α gesendet wurde. Summiert wird über die Menge M1 aller Sendesymbole, welche einen gesendeten Wert "1" repräsentieren. Geteilt wird durch die entsprechende Summenbildung über die Menge M0 aller Sendesymbole, welche eine "0" repräsentieren.

In dem Symbolentscheider 7, welcher Entscheidungen im polaren Koordinatensystem durchführt, werden sowieso für mehrere Symbole des verwendeten Symbol-Alphabets aus dem Abstand des empfangenen Signals zum jeweiligen Symbol bzw. dessen Symbolposition Se(r, φ) Metriken berechnet, wobei diejenige Entscheidung als richtig ausgewählt wird, welche die erste, geringste Metrik hat, z.B. A1 = a|Δr1| + |Δφ1|. Zusätzlich dazu wird verfahrensgemäß auch der zweitgeringste Abstand zu einem anderen Symbol als zweite Metrik A2 = a |Δr2| + |Δφ2| bestimmt, was dem zweit-wahrscheinlichsten Symbol bzw. dessen Symbolposition Se*(r, φ) entspricht, die ebenfalls über den Koordinatenumsetzer 15 an insbesondere einen nachfolgenden Viterbi-Dekoder ausgegeben werden kann. Mit den dünnen Linien sind in Fig. 1 die zweiten Entscheidungsgrenzen EZ2 zu diesen zweit-wahrscheinlichsten Symbolen bzw. Symbolpositionen Se*(r, φ) skizziert, wobei in Fig. 1 die Anzahl der durch den Hilfsentscheider zugelassenen zu berücksichtigenden Symbole auf vier beschränkt ist.

Bei der Auswahl der zweit-wahrscheinlichsten Symbole wird vorzugsweise beachtet, dass auch Symbole in anderen Quadranten berücksichtigt werden. Durchgeführt wird somit ein Verfahren zum Entscheiden eines Symbols S eines mit einem Quadratur-Signalpaar I, Q gekoppelten Signals sd, bei dem die Entscheidung durch Analyse des Abstandes zumindest eines Empfangspunktes S(r, φ) zu zumindest einem Sollpunkt Se(r, φ) im komplexen Koordinatenraum getroffen wird und der Abstand im nicht oder im nicht-ausschließlich-kartesischen komplexen Koordinatenraum analysiert und daraufhin die Entscheidung getroffen wird, wobei während des Entscheidungsprozesses im Entscheider 7 eine Zuverlässigkeit Z der Entscheidung gewonnen wird, die auch an einen nachfolgenden Viterbi-Dekoder ausgegeben wird.

Um aus der Metrik eine Zuverlässigkeitsinformation zu erhalten, kann die Formel (1) mittels der Annahme, dass lediglich die jeweilig wahrscheinlichsten Symbolpositionen Se(r, φ), Se*(r, φ) zur Logarithmus-Summe beitragen, noch vereinfacht werden zu

$$Z = \log\left(\frac{P[s = \alpha 1 \mid R]}{P[s = \alpha 0 \mid R]}\right) \tag{2}$$

Die Metrik A1 stellt somit ein Maß für die Wahrscheinlichkeit eines Symbols α(q) dar. Wird angenommen, dass die zweite Metrik A2 eine konträre Bit-Entscheidung bewirkt, das heißt ein Symbol α(1-q) repräsentiert, dann kann die Zuverlässigkeit Z aus den Metriken A1 und A2 der beiden wahrscheinlichsten Punkte abgeleitet werden gemäß

$$Z = \log(P[s = \alpha 1 | R]) - \log(P[s = \alpha 0 | R]) = g(A1, A2) \tag{3}$$

bzw.

$$Z = \log(P[s = \alpha 1 | R]) - \log(P[s = \alpha 0 | R]) = f(A1) - f(A2). \quad (4)$$

Eine einfache Möglichkeit, die Zuverlässigkeit Z für den Viterbi-Decoder zu ermitteln, besteht in einer Berechnung gemäß

$$Z = abs(A1 - A2)/NF = (A2 - A1)/NF, \quad (5)$$

wobei der Betrag der Differenzen der beiden Metriken A1, A2 durch einen Normierungsfaktor NF dividiert wird, welcher beispielsweise der Summe der beiden Metriken A2 + A1 oder der zweiten Metrik A2 oder einer Konstanten entsprechen kann.

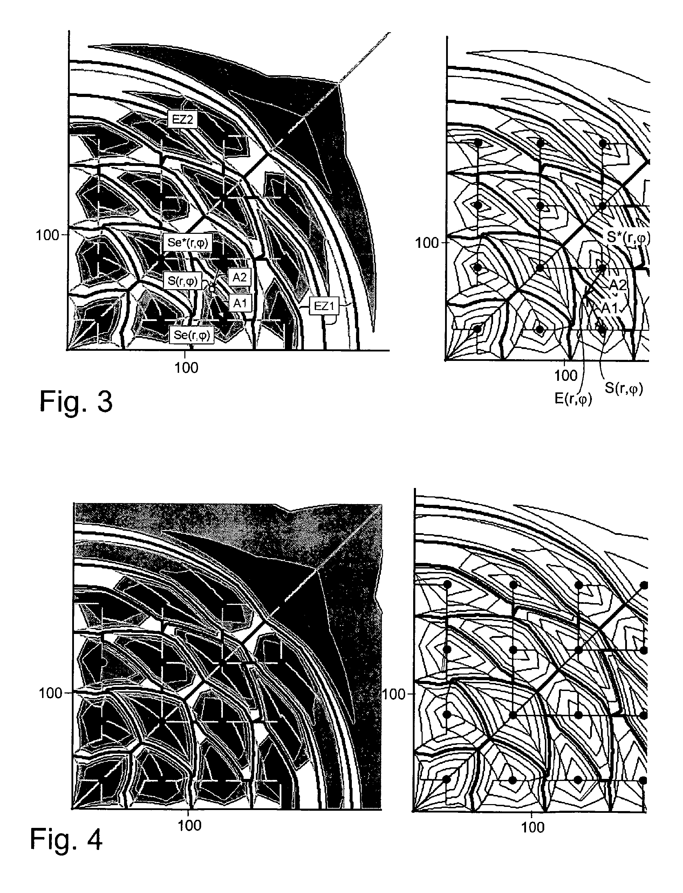

Fig. 3 zeigt beispielhaft den ersten Quadranten für den ersten dieser Normierungsfaktoren NF, welcher aus der Summe der beiden Metriken A1 + A2 gebildet ist. Die ersten bzw. primären Entscheidungsgrenzen EZ1 sind mit dicken Linien dargestellt, während die zweiten bzw. sekundären Entscheidungsgrenzen EZ2 zu den zweit-wahrscheinlichsten Symbolen bzw. deren Symbolpositionen innerhalb der ersten Entscheidungsgrenzen mit dünnen Linien dargestellt sind. Die Wahrscheinlichkeit des richtigen Empfangs wird durch die Intensität der Graustufen angezeigt, wobei dunkel wirkende Bereiche auf eine geringe Abweichung des digitalisierten Signals S vom entschiedenen Symbol Se hinweisen.

Fig. 4 zeigt den ersten Quadranten beispielhaft für den zweiten beispielhaften Normierungsfaktor NF, welcher gleich der zweiten Metrik A2 gesetzt ist.

**Patentansprüche**

1. Verfahren zum Entscheiden eines Symbols (S) eines mit einem Quadratur-Signalpaar (I, Q) gekoppelten Signals (sd), bei dem

   - die Entscheidung durch Analyse der Metrik zumindest eines Empfangspunktes (S(r, φ)) zu zumindest einem Sollpunkt (Se(r, φ)) im komplexen Koordinatenraum (I, Q) getroffen wird und
   - die Metrik im nicht oder im nicht-ausschließlich-kartesischen komplexen Koordinatenraum analysiert und daraufhin die Entscheidung getroffen wird,

   **dadurch gekennzeichnet , dass**

   - während des Entscheidungsprozesses eine Zuverlässigkeit (Z) der Entscheidung gewonnen wird.

2. Verfahren nach Anspruch 1, bei dem die Entscheidung im polaren Koordinatenraum berücksichtigt wird, wobei als Metrik der euklidische Abstand zwischen Empfangs- und Sollpunkten und/oder die Werte von Winkel- und Radius-Projektionen der Metrik (A1, A2) zwischen Empfangspunkt und zumindest einem Sollpunkt analysiert wird.

3. Verfahren nach Anspruch 1 oder 2, bei dem die Zuverlässigkeit (Z) bestimmt wird durch Berücksichtigung einer geringsten Metrik (A1, A2) zwischen dem Empfangspunkt (S(r, φ)) zu sowohl einem ersten als auch einem zweiten Sollpunkt (Se (r, φ)) , (Se*(r, φ)).

4. Verfahren nach Anspruch 3, bei dem die jeweils geringsten Metriken (A1, A2) zu den Sollpunkten (Se(r, φ)), (Se*(r, φ)) für das vorläufige Symbol S(r, φ) bestimmt wird.

5. Verfahren nach Anspruch 3 oder 4, bei dem der zweite Sollpunkt (Se*(r, φ)) ein für die Entscheidung zweitwahrscheinlichstes Symbol ergibt.

6. Verfahren nach einem vorstehenden Anspruch, bei dem die Zuverlässigkeit Z bestimmt wird gemäß

$$Z = \log\left(\frac{\sum_{A \in M1} P[s = \alpha \mid R]}{\sum_{A \in M0} P[s = \alpha \mid R]}\right)$$

mit der Summe der bedingten Wahrscheinlichkeit P[s=A|R], dass bei empfangenem Symbol R das Symbol $\alpha$ gesendet wurde, über die Menge M1 aller Sendesymbole, welche einen gesendeten Wert "1" repräsentieren, und der entsprechenden Summenbildung über die Menge M0 aller Sendesymbole, welche eine "0" repräsentieren.

**7.** Verfahren nach einem vorstehenden Anspruch, bei dem die Zuverlässigkeit Z bestimmt wird gemäß

$$Z = \log\left(\frac{P[s = \alpha 1 \mid R]}{P[s = \alpha 0 \mid R]}\right)$$

mit P[s = $\alpha$1|R] für die Wahrscheinlichkeit des wahrscheinlichsten Sendesymbols mit gesendetem Wert 1 und P[s = $\alpha$0|R] für die Wahrscheinlichkeit des wahrscheinlichsten Sendesymbols mit gesendetem Wert 0.

**8.** Verfahren nach einem vorstehenden Anspruch, bei dem die Zuverlässigkeit Z bestimmt wird gemäß

```
Z = abs(A1 - A2)/NF = (A2 - A1)/NF
```

mit A1 als geringster Metrik für eine wahrscheinlichste Symbolposition, A2 einer zweit-geringster Metrik zu einer zweit-wahrscheinlichsten Symbolposition und NF als Normierungsfaktor.

**9.** Verfahren nach Anspruch 8, wobei der Normierungsfaktor (NF) gebildet wird durch die zweit-geringste Metrik (A2) oder die Summe der Metriken (A1 + A2) oder eine Konstante.

**10.** Schaltungsanordnung zum Entscheiden eines Symbols (S) eines mit einem Quadratur-Signalpaar (I, Q) gekoppelten Signals (sd) mit

- einem Koordinatenumsetzer (20) zum Umsetzen des Signals aus kartesischen Koordinaten (I, Q) in nicht-kartesische Koordinaten (r, ($\varphi$) und
- einer Entscheidungseinrichtung zum Entscheiden eines Symbols (S) aufgrund einer Abstandsanalyse einer minimalen Metrik (A1, A2) zwischen einem Empfangspunkt (S(r, $\varphi$)) und zwei dazu nächst-wahrscheinlichen Sollpunkten (Se(r, $\varphi$)), (Se*(r, $\varphi$)) mit Gewinnung eines Maßes für die Zuverlässigkeit der Entscheidung.

**11.** Schaltungsanordnung nach Anspruch 10 zum Durchführen eines Verfahrens nach einem der Ansprüche 1 bis 9.

Fig. 1

Fig. 2

**Fig. 3**

**Fig. 4**

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10344756 A1